# FASCICULE DE BREVET EUROPEEN

(11) **EP 2 850 349 B1**
(45) Date de publication et mention de la délivrance du brevet: **23.03.2016**
(21) Numéro de dépôt: 13728441.0
(22) Date de dépôt: 07.05.2013
(51) Int. Cl.: F16K 11/085, F02M 26/00, F02B 29/04

(54) **VANNE DE CIRCULATION DE FLUIDE**
FLÜSSIGKEITSUMLAUFVENTIL
FLUID CIRCULATION VALVE

(30) Priorité: 15.05.2012 FR 1254436
(43) Date de publication de la demande: 25.03.2015
(73) Titulaire: Valeo Systèmes de Contrôle Moteur, 95800 Cergy (FR)
(72) Inventeur: LALLEMANT, Mathieu, F-78600 Maisons-Laffitte (FR); GIRARDON, Franck, F-78700 Conflans Sainte Honorine (FR); LEBRASSEUR, Patrick, F-60240 Montagny en Vexin (FR)
(74) Mandataire: Garcia, Christine
(86) Numéro de dépôt international: PCT/FR2013/051019
(87) Numéro de publication internationale: WO 2013/171411

(56) Documents cités:
- EP-A1- 1 363 013
- CH-A5- 583 393
- DE-A1- 19 860 637

## Description

La présente invention concerne une vanne de circulation de fluide destinée plus particulièrement quoique non exclusivement à équiper les systèmes de circulation de fluide associés aux moteurs à combustion interne, qu'ils soient à essence ou Diesel, de véhicules, notamment de véhicules automobiles.

De telles vannes peuvent avoir des fonctionnalités diverses et, par exemple, quand elles sont prévues sur les moteurs Diesel à turbocompresseur, elles peuvent être utilisées pour doser la quantité d'air amenée dans la ligne d'admission du moteur, ou pour dériver une partie des gaz d'échappement circulant dans la ligne d'échappement et l'envoyer en direction de la ligne d'admission, notamment à des fins de traitement des oxydes d'azote. On parle alors de gaz d'échappement recirculés. Les vannes selon l'invention concernent ainsi, en particulier, les vannes permettant la circulation de gaz.

Dans les circuits de gaz d'échappement recirculés, il est connu d'utiliser des échangeurs de chaleur, dit refroidisseur de gaz d'échappement recirculés, permettant d'abaisser la température desdits gaz. Cependant, dans certains cas de fonctionnement, il n'est pas nécessaire de refroidir les gaz d'échappement. Il est alors intéressant de pouvoir les faire circuler vers la ligne d'admission du moteur sans passer par l'échangeur de chaleur. Les circuits de gaz d'échappement recirculés comprennent pour cela une voie refroidie munie de l'échangeur de chaleur et une voie non-refroidie, contournant la voie refroidie.

Il est ainsi connu des circuits de gaz d'échappement recirculés comprenant une première vanne permettant de doser la quantité de gaz d'échappement recirculés et une seconde vanne permettant d'orienter les gaz vers la voie refroidie ou vers la voie non-refroidie. On comprend que de tels circuits présentent des inconvénients en ce qu'ils nécessitent deux vannes distinctes.

On rencontre une situation comparable dans les lignes d'admission du moteur. En effet, dans celles-ci, il est connu d'utiliser des refroidisseurs d'air de suralimentation. Cependant, dans certains cas de fonctionnement, il n'est pas nécessaire de refroidir les gaz d'admission. Il est alors intéressant de pouvoir les faire circuler vers le moteur sans passer par le refroidisseur. Les circuits de gaz d'admission comprennent pour cela une voie refroidie munie du refroidisseur d'air de suralimentation et une voie non-refroidie, contournant la voie refroidie.

Il est ainsi connu des circuits d'alimentation en air du moteur comprenant une première vanne permettant de doser la quantité de gaz d'admission dans la voie refroidie et une seconde vanne permettant de doser les gaz d'admission dans la voie non-refroidie. On comprend que de tels circuits présentent eux-aussi des inconvénients en ce qu'ils nécessitent deux vannes distinctes.

La présente invention a pour but de remédier à ces inconvénients et concerne une vanne de circulation de fluide, comportant un corps apte à être traversé par ledit fluide, et un premier et un second moyen d'obturation, disposés en série, selon le sens d'écoulement du fluide, dans ledit corps et pouvant occuper chacun, par rotation desdits moyens par rapport audit corps, différentes positions angulaires, ladite vanne comprenant en outre une cinématique permettant d'entraîner lesdits moyens d'obturation à partir d'un même moteur d'actionnement, ladite vanne étant configurée pour autoriser :
- sur une première plage angulaire dudit premier moyen d'obturation, un dosage dudit fluide dans une première voie de sortie de ladite vanne, ledit second moyen d'obturation étant dans une position de pleine ouverture de ladite première voie,
- sur une seconde plage angulaire dudit premier moyen d'obturation, un dosage dudit fluide dans une seconde voie de sortie de ladite vanne, ledit second moyen d'obturation étant dans une seconde position de pleine ouverture de ladite seconde voie.

On dispose de la sorte d'un seul et même organe remplissant à la fois les fonctions désirées de dosage et d'orientation. Une telle configuration de la vanne résulte, en particulier, d'une configuration combinée dudit corps, desdits premier et second moyen d'obturation et de la dite cinématique.

Selon différents modes de réalisation de l'invention, qui pourront être pris ensemble ou séparément :
- ladite vanne est en outre configurée pour autoriser, sur une troisième et/ou quatrième plage angulaire dudit premier moyen d'obturation, une fermeture d'un passage d'entrée de ladite vanne,
- les troisième et quatrième plages alternent avec les première et deuxième plages,
- ledit corps comprend un premier logement pour le premier moyen d'obturation et un second logement pour le second moyen d'obturation, lesdits premier et second passages de sortie débouchant, notamment axialement, dans ledit second logement,
- ledit passage d'entrée débouche dans ledit premier logement, notamment radialement,
- ledit corps comprend un passage pour le fluide reliant, notamment radialement, lesdits premier et second logements, dit passage intermédiaire.

De manière avantageuse, ladite cinématique, ledit corps et lesdits premier et/ou second moyens d'obturation sont configurés pour autoriser une rotation desdits premier et/ou second moyens d'obturation sur plus de 360°

De même, ladite cinématique, ledit corps et lesdits premier et/ou second moyens d'obturation sont configurés pour autoriser une rotation desdits premier et/ou second moyens d'obturation dans les deux sens.

Selon un aspect de l'invention, le premier et/ou le second moyen d'obturation comportent chacun au moins une partie d'obturation agencée dans un plan incliné, respectivement par rapport audit premier et/ou second logement, et coopérant avec une paroi latérale du logement correspondant par une génératrice périphérique de manière à assurer un contact étanche entre le premier et/ou le second moyen d'obturation, d'une part, et le corps, d'autre part, en au moins une position angulaire.

Ainsi, on pourra obtenir une étanchéité sur l'intégralité de la périphérie du volet, ceci sans utilisation de biseaux. La partie d'obturation pourra de plus tourner sur 360° et permettra d'assurer l'étanchéité avec la paroi latérale du logement grâce au contact continu entre eux, donné par l'inclinaison de la partie d'obturation avec la paroi du logement, ceci que ladite partie d'obturation tourne dans un sens ou dans l'autre. Il sera également possible, en fonction de la configuration de la vanne, de disposer de plusieurs positions de fermeture, par exemple deux positions écartées de 180°, étanches sur l'intégralité de la périphérie du volet.

Ladite partie inclinée du premier et/ou du second moyen d'obturation est conformée, par exemple, en un disque rotatif dont le bord périphérique constitue la génératrice de contact avec la paroi latérale du logement correspondant de manière à assurer un contact cylindre sur cylindre.

Ainsi, la projection du disque rotatif incliné, le long de l'axe rotation, dans le logement cylindrique est circulaire et le disque coopère parfaitement avec la paroi latérale de celui-ci de section correspondante. On remarque la simplicité de réalisation de la partie inclinée d'obturation qui permet en outre, comme dit précédemment, d'éviter les fuites en position de fermeture du disque.

Ladite partie inclinée d'obturation pourra former un angle de sensiblement 45° avec l'axe du logement correspondant du corps.

Ledit premier et/ou ledit second moyen d'obturation comporte, par exemple, une tige de commande qui est reliée à la partie inclinée pour l'entraîner en rotation et qui est disposée dans l'axe dudit logement correspondant, passant par le centre de ladite partie inclinée. Cette tige porte ainsi simplement en bout le disque, de sorte que cette réalisation du moyen d'obturation s'affranchit de l'axe s'étendant usuellement le long du volet et entraînant les difficultés d'assemblage et les risques de fuite et d'interférence liés à un désaxage.

En effet, le volet n'est plus dans le plan de son arbre de rotation, ce qui réduit les interférences entre ces deux pièces. De plus, le volet, par sa symétrie, peut se monter indifféremment dans les deux sens sans avoir recours à un détrompage.

En particulier, ladite tige et ladite partie inclinée du moyen d'obturation peuvent être réalisées en une seule pièce, ou assemblées fixement l'une à l'autre par surmoulage, soudage, collage, élément de fixation, etc...

Du côté opposé à la partie inclinée d'obturation, la tige est montée, notamment, dans un palier de guidage solidaire du corps et/ou est reliée, en sortie de celui-ci, à un moyen d'entraînement en rotation de ladite cinématique.

Lesdites tiges de commande des premier et second moyens d'obturation pourront être parallèles entres elles.

Ledit passage d'entrée et ledit passage intermédiaire pour ledit fluide débouchent, par exemple, sensiblement radialement par rapport audit premier logement avec le premier moyen d'obturation, les séparant en au moins l'une de ses positions angulaires.

Ledit passage d'entrée et ledit passage intermédiaire de fluide sont, notamment, coaxiales et perpendiculaires à l'axe dudit premier logement.

Ledit passage d'entrée et ledit passage intermédiaire de fluide sont, par exemple, circulaires et les diamètres de ceux-ci sont inférieurs à un petit axe du disque de la partie inclinée correspondante, prévue coopérant par son bord avec la paroi latérale du premier logement.

Différents modes de réalisation de l'invention seront décrits ci-après en regard des figures annexées qui feront bien comprendre comment l'invention peut être réalisée. Sur ces figures, des références identiques désignent des éléments semblables.
La figure 1 est une vue de coupe, schématique, en élévation d'un exemple de réalisation de la vanne conforme à l'invention.
La figure 2 est une vue de coupe, schématique, d'après la ligne II-II de la figure 1.
Les figures 3 à 5 montrent le degré d'ouverture, respectivement, d'une voie d'entrée, d'une première voie de sortie et d'une seconde voie de sortie de la vanne de la figure 1, en fonction de la position angulaire de ses moyens d'obturation.
La figure 6 est une vue en élévation d'un premier logement et du moyen d'obturation correspondant de la vanne de la figure 1.
La figure 7 montre, en perspective, l'intérieur du logement de la figure 6.
La figure 8 montre en perspective le moyen d'obturation de la figure 6.
Les figures 9 à 12 représentent respectivement, en coupe transversale, les positions dudit moyen d'obturation dans des positions d'ouverture de 90°, 45°, 5° et de fermeture de 0° ou 180°.
Les figures 13 et 14 montrent des graphiques représentant respectivement la zone de contact dudit moyen d'obturation en position de fermeture et d'ouverture maximale, sur le logement du corps de ladite vanne ci-dessus, illustré à plat.

La vanne de circulation de fluide conforme à l'invention est destinée à assurer le dosage de l'air introduit dans la ligne d'admission d'un moteur thermique, en particulier Diesel, étant entendu qu'elle pourrait avoir toute autre fonction, notamment une fonction de dosage de gaz d'échappement recirculés.

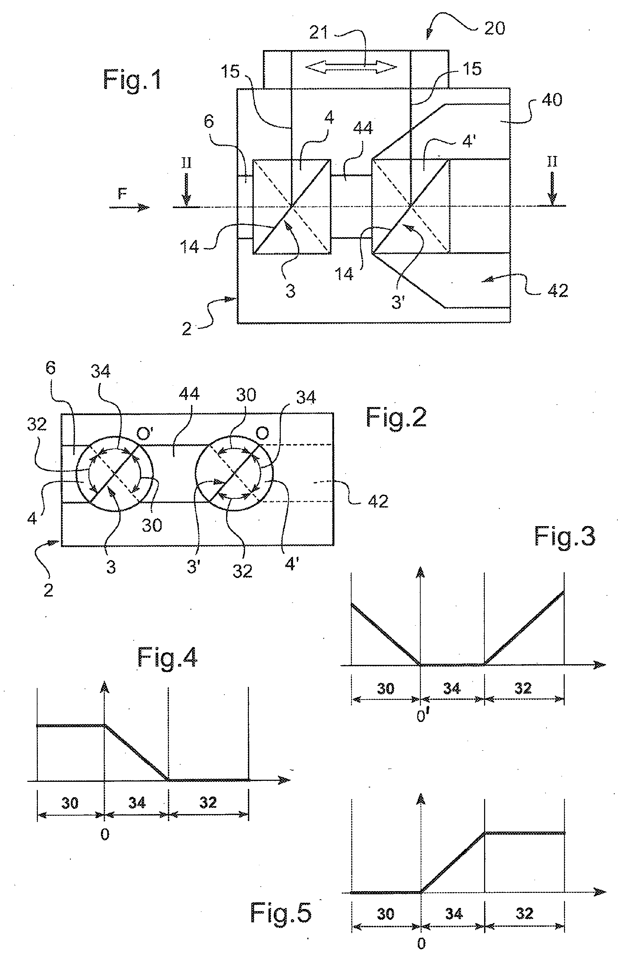

Comme illustré à la figure 1, ladite vanne de circulation de fluide, comporte un corps 2, apte à être traversé par ledit fluide, et un premier et un second moyen d'obturation 3, 3', disposés dans ledit corps 2. Lesdits premier 3 et second 3' moyens d'obturation sont situés en série selon le sens d'écoulement du fluide F. Autrement dit, ladite vanne est configurée pour que la circulation du fluide dans ledit corps soit d'abord déterminée par ledit premier moyen d'obturation 3 puis par le second moyen d'obturation 3'.

Lesdits moyens d'obturation 3, 3' peuvent occuper chacun, par rotation desdits moyens 3, 3' par rapport audit corps 2, différentes positions angulaires. Aux figures 1 et 2, une première position angulaire du premier moyen d'obturation 3 est illustré en trait plein et l'autre en pointillés.

Ladite vanne comprend en outre une cinématique 20. Comme cela est symbolisé par la flèche repérée 21, ladite cinématique permet d'entraîner lesdits moyens d'obturation 3, 3' à partir d'un même moteur d'actionnement, non représenté. Ladite cinématique comprend tout moyen connu de l'homme de l'art tel que, notamment, des roues dentées coopérant avec des pignons des moyens d'obturation 3, 3' et/ou dudit moteur d'actionnement.

Comme illustré à la figure 2, ladite vanne est configurée pour autoriser :
- sur une première plage angulaire 30 dudit premier moyen d'obturation 3, un dosage dudit fluide dans une première voie de sortie 40 (figure 1) de ladite vanne, ledit second moyen d'obturation 3' étant dans une position de pleine ouverture de ladite première voie 40, et
- sur une seconde plage angulaire 32 dudit premier moyen d'obturation 3, un dosage dudit fluide dans une seconde voie de sortie 42 de ladite vanne, ledit second moyen d'obturation 3' étant dans une seconde position de pleine ouverture de ladite seconde voie 42.

On dispose de la sorte d'une vanne qui permet de doser indépendamment le fluide dans deux directions distinctes, ceci à l'aide d'une cinématique et d'un moteur d'actionnement uniques.

Ladite vanne pourra en outre être configurée pour autoriser, sur une troisième plage angulaire 34 et/ou sur une quatrième plage angulaire dudit premier moyen d'obturation 3, une fermeture d'un passage d'entrée 6 de ladite vanne. Ici, les troisième 34 et quatrième plages angulaire alternent avec les première 30 et deuxième 32 plages angulaires.

Comme cela apparaît à la figure 2, grâce à ladite cinématique, lesdites plages angulaires 30, 32, 34 dudit premier moyen d'obturation 3 correspondent à des plages angulaires dudit second moyen d'actionnement 3. Autrement dit, une position angulaire dudit premier moyen d'obturation 3 correspond à une position angulaire dudit second moyen d'obturation 3' et réciproquement. Ainsi, un degré d'ouverture de la voie d'entrée 6 correspond à un et seul degré d'ouverture de la première voie de sortie 40 et à un et un seul degré d'ouverture de ladite second voie de sortie 42.

Ladite cinématique pourra être configurée pour entraîner le second moyen d'obturation 3' en sens inverse dudit premier moyen d'obturation 3, par exemple à l'aide d'une roue de renvoie. Lesdites première, seconde, troisième et quatrième plages angulaires représentent, par exemple, une rotation de 90°.

Le degré d'ouverture du passage d'entrée 6 en fonction de la position angulaire 30 dudit premier moyen d'obturation 3 est illustré à la figure 3. La première plage angulaire est parcourue par ledit moyen d'obturation 3 par une rotation dans un premier sens dudit premier moyen d'obturation 3 à partir d'une position angulaire d'origine O'. Dans cette plage, le passage d'entrée 6 passe, selon une progression linéaire, d'une position fermée pour ladite position angulaire d'origine à une position de pleine ouverture en fin de plage. La troisième plage angulaire 34 est parcourue par une rotation dudit premier moyen d'obturation 3 dans le sens opposé à partir de ladite position angulaire d'origine O'. Dans cette plage, le passage d'entrée 6 reste fermé. La seconde plage angulaire 32 est parcourue par une rotation supplémentaire dudit premier moyen d'obturation 3, le passage d'entrée 6 passant alors, selon une progression linéaire, d'une position fermée à une position de pleine ouverture en fin de plage.

Le degré d'ouverture du premier passage de sortie 40 en fonction de la position angulaire dudit second moyen d'obturation 3' est illustré à la figure 4. Lorsque ledit premier moyen d'obturation 3 est dans sa première plage angulaire 30, ledit second moyen d'obturation 3' laisse ouvert ledit premier passage de sortie 40. A l'inverse, lorsque ledit premier moyen d'obturation 3 est dans sa seconde plage angulaire 32, ledit second moyen d'obturation 3' maintient fermé ledit premier passage de sortie 40. Dans ladite troisième plage angulaire 34, intermédiaire, dudit premier moyen d'obturation 3, le second moyen d'obturation 3' passe, selon une progression linéaire, d'une position d'ouverture du premier passage de sortie 40, pour ladite position angulaire d'origine, à une position de fermeture dudit premier passage de sortie 40, en fin de plage.

Le degré d'ouverture du second passage de sortie 42 en fonction de la position angulaire dudit second moyen d'obturation 3' est illustré à la figure 5. Lorsque ledit premier moyen d'obturation 3 est dans sa première plage angulaire 30, ledit second moyen d'obturation maintient fermé ledit second passage de sortie 42. A l'inverse, lorsque ledit premier moyen d'obturation 3 est dans sa seconde plage angulaire 32, ledit second moyen d'obturation 3' laisse ouvert ledit second passage de sortie 42. Dans ladite troisième plage angulaire 34, intermédiaire, dudit premier moyen d'obturation 3, le second moyen d'obturation 3' passe, selon une progression linéaire, d'une position de fermeture du second passage de sortie 42, pour ladite position angulaire d'origine, à une position d'ouverture dudit second passage de sortie 40.

On constate que la première voie de sortie 40 est fermée lorsque la seconde voie de sortie est ouverte. Réciproquement, la seconde voie de sortie 40 est fermée lorsque la première voie de sortie est ouverte.

Par ailleurs, lesdites première, seconde et troisième plages angulaires sont contiguës.

Si l'on se reporte de nouveau aux figures 1 et 2, on constate par ailleurs que ledit corps 2 comprend ici un premier logement 4 pour le premier moyen d'obturation 3 et un second logement 4' pour le second moyen d'obturation 3'. Lesdits premier et second logements 4, 4' sont cylindriques à section transversale circulaire.

Ledit passage d'entrée 6 débouche dans ledit premier logement 4. Lesdits premier 40 et second 42 passages de sortie débouchent dans ledit second logement 4', ici axialement.

Ledit corps 2 comprend en outre un passage 44, dit intermédiaire, pour le fluide reliant lesdits premier 4 et second 4' logements.

Selon un premier mode de réalisation, non illustré, ledit premier moyen d'obturation 3 et/ou ledit second moyen d'obturation 3' pourra comprendre un boisseau cylindrique, muni de passages de fluide venant ou non en correspondance desdits passages d'entrée 6, intermédiaire 44 et/ou de sortie 40, 42.

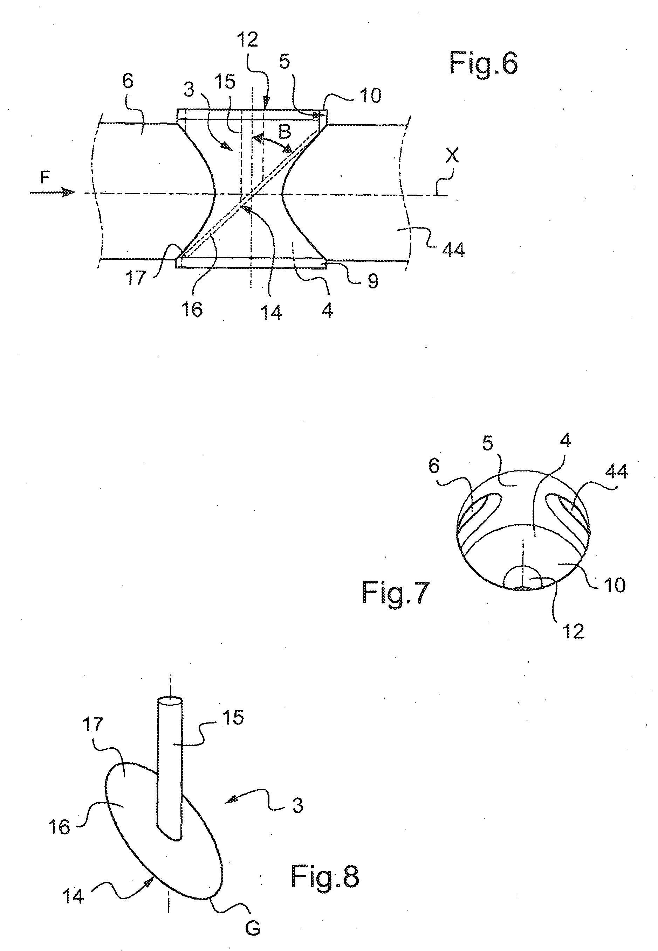

On détaille en relation avec les figures 6 à 14, un autre mode de réalisation desdits moyens d'obturation, en l'occurrence dudit premier moyen d'obturation 3, en relation avec le logement 4 correspondant.

Ledit logement est délimité par une paroi latérale 5. Ce logement interne peut être assimilé à un alésage. Dans la paroi de celui-ci débouchent, ici radialement à l'axe A dudit logement 4, le passage d'entrée 6 et le passage intermédiaire 44. Ces passages d'entrée 6 et intermédiaire 44 sont, par exemple, alignées l'un par rapport à l'autre. Ils présentent ici un axe longitudinal X coupant perpendiculairement l'axe A du logement 4, et ont des diamètres identiques.

On voit par ailleurs que le logement cylindrique interne 4 est fermé totalement par un fond transversal 9 à l'une de ses extrémités, tandis qu'à son extrémité opposée, se trouve un couvercle transversal 10 se prolongeant par un alésage axial 12. Celui-ci est traversé par le moyen d'obturation 3 qui coopère avec ladite cinématique, non représentée, géré par une unité de commande connue en soi pour entraîner en rotation, autour de l'axe A, le moyen d'obturation 3.

Ce dernier présente ici une partie inclinée d'obturation 14 et une tige de liaison 15. En particulier, la partie inclinée 14 est conformée en un volet elliptique 16, rotatif, disposé dans un plan incliné par rapport à l'axe A du logement 4 et centré sur ledit axe A, de façon que son bord périphérique 17 soit en contact constant avec la paroi latérale 5 du logement 4 de manière à isoler le passage d'entrée 6 et le passage intermédiaire 44 dans au moins une position angulaire donnée du moyen d'obturation pour interrompre la circulation du fluide, ou à mettre en communication fluidique le passage d'entrée 6 et le passage intermédiaire 44 avec un débit réglable selon l'ouverture angulaire donnée au volet d'obturation. Ce bord périphérique 17 constitue ainsi une génératrice G toujours en contact étanche avec la paroi latérale 5 du logement.

Par « incliné », on entend compris strictement entre 0° et 90°. Par « volet », on entend une pièce présentant deux surfaces inclinées par rapport à l'axe A et reliées par le bord périphérique 17. Lesdites surfaces inclinées sont éventuellement parallèles entre elles. La pièce présente une faible épaisseur, à savoir une distance comprise entre lesdites surfaces inclinées très inférieures au diamètre du logement 4, notamment dix fois inférieures. Il s'agit, par exemple, d'un disque elliptique rotatif.

Des considérations géométriques sont prises pour assurer le bon fonctionnement de la vanne 1. Le volet 16 à une forme elliptique de grand-axe supérieur au diamètre du logement circulaire 4 et de petit-axe sensiblement inférieur au diamètre du logement circulaire 4. Ici, le diamètre du logement circulaire 4 est en outre supérieur aux diamètres identiques des passages d'entrée 6 et intermédiaire 44 de fluide. La tige de liaison 15 est agencée suivant l'axe A du logement, de sorte à être centrée sur le disque inclinée, avec l'angle B entre le plan incliné du disque et l'axe A égal ici à 45°. Pour avoir un contact constant avec la paroi latérale 5 du logement, le grand axe du disque 16 est donc sensiblement égal au diamètre du logement multiplié par √2. Ce contact peut être défini comme étant un contact cylindre/cylindre entre la paroi 5 de section circulaire du logement 4 et la génératrice G correspondant au bord périphérique 17 du disque 16 incliné et qui est circulaire en projection sur un plan perpendiculaire à l'axe de rotation du volet. Le petit-axe du volet 16 pourra être sensiblement supérieur au diamètre des passages d'entrée 6 et intermédiaire 44 de fluide.

On constate que le montage du moyen d'obturation 3 dans le logement 4 du corps de la vanne ne nécessite aucune opération de réglage fastidieuse, seule une mise en butée axiale du moyen 3 dans le logement étant exigée pour centrer le disque 16 par rapport aux passages de fluide.

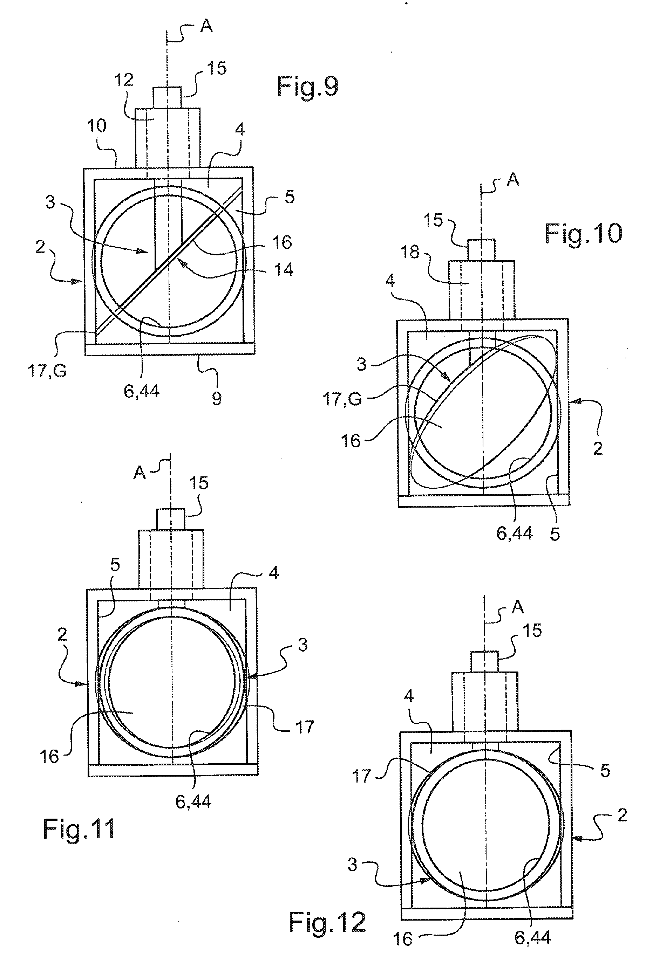

La tige 15 est associée, par l'une de ses extrémités, au disque 16, par assemblage ou surmoulage, ou elle est formée avec le disque, de sorte à avoir un moyen d'obturation monobloc 3. A titre d'exemple, le disque 16 peut être en plastique et la tige 15 en métal ou inversement, ou les deux peuvent être en matière plastique ou en métal selon la réalisation monobloc ou composite choisie. L'autre extrémité de la tige traverse le trou axial 12 du corps 2 par l'intermédiaire d'un palier de guidage 18 (figure 9 à 12), solidaire dudit corps 2, pour être reliée à ladite cinématique.

Dans la position illustrée en regard de la figure 12, le disque incliné 16 du moyen d'obturation 3 isole le passage d'entrée 6 du passage intermédiaire 44, empêchant la circulation du fluide à travers la vanne 1. Pour cela, on voit que le bord périphérique 17 du disque incliné 16 coopère avec étanchéité et complètement avec la paroi latérale 5 du logement cylindrique 4, à la manière d'une cloison séparant le logement en deux chambres internes distinctes et étanches, chacune tournée vers l'un des passages d'entrée 6 et intermédiaire 44 de passage du fluide. Cette position angulaire du disque incliné 16 et donc du moyen d'obturation 3 correspond à une fermeture de la vanne 1 avec pour point d'origine, une rotation angulaire nulle de 0° du moyen d'obturation 3.

Lorsque la cinématique sollicite la tige 15, elle provoque la rotation du moyen d'obturation 3 selon l'angle souhaité correspondant à un débit déterminé du fluide à travers la vanne 1. En regard de la figure 9, le moyen d'obturation 3, via sa tige 15, a subi une rotation de +90° dans le sens horaire autour de l'axe A, si bien que le disque incliné 16 a tourné dans le logement 4 pour se trouver dans un plan sensiblement parallèle aux passages d'entrée 6 et intermédiaire 44 du corps 2 de la vanne. Par suite de la rotation, le bord périphérique 17 n'est plus en contact total avec la paroi latérale 5 du logement, mais seulement partiel puisque des parties opposées du bord 17 se trouvent en regard des passages d'entrée 6 et intermédiaire 44. Cette position angulaire effacée du disque permet le passage du fluide entre les passages d'entrée 6 et intermédiaire 44 via le logement interne étanche 4 du corps, et correspond à une pleine ouverture de la vanne 1 pour laquelle le débit de circulation du fluide est maximal, ceci vers le second logement 4' où il sera dirigé dans l'un des passages de sortie.

Le disque incliné 16 pourra aussi occuper une position symétrique de la précédente, c'est-à-dire que le moyen d'obturation a tourné, sous l'action du dispositif d'entraînement, de -90° dans le sens anti-horaire par rapport à la position de fermeture de 0°. Ainsi, le disque incliné 16 se trouve parallèle aux passages d'entrée 6 et intermédiaire 44, assurant un débit maximal vers le second logement 4' où il sera dirigé dans l'autre des passages de sortie.

Une position intermédiaire du moyen d'obturation 3 est illustrée à titre d'exemple en regard de la figure 10, laquelle position correspond à une rotation de +45° du disque incliné 16 autour de l'axe A. Le bord 17 du disque est alors en partie en regard des passages d'entrée 6 et intermédiaire 44, mettant en communication celles-ci pour le passage du fluide sous un débit moyen.

Quant à la figure 11, elle montre que le bord 17 du disque incliné 16 est en totalité en contact avec la paroi latérale 5 du logement lorsque le moyen d'obturation se trouve à environ 5° de la position de fermeture initiale de 0°. Cela signifie que le recouvrement total du disque 16 et du logement 4 permet d'accepter un défaut angulaire lors de l'assemblage sans diminuer le niveau d'étanchéité de la vanne. La fermeture de la vanne est finalement acquise sur une plage angulaire d'environ 10° (+ ou -5°).

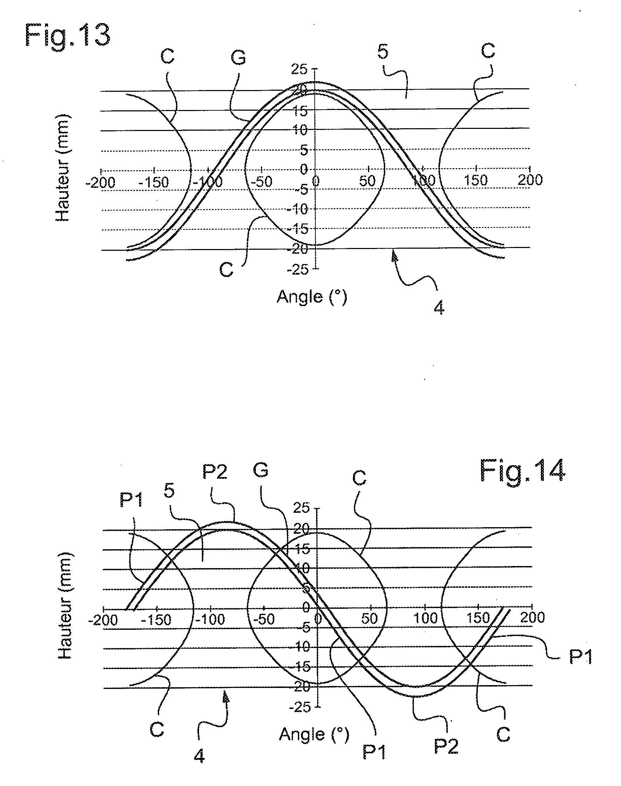

Les graphiques des figures 13 et 14 mettent bien en évidence la position du disque incliné 16 selon la hauteur (mm) de la paroi latérale 5 du logement, laquelle paroi de 360° est développée de -180° à +180° pour être représentée en plan.

Sur la figure 13, le disque incliné 16 du moyen d'obturation 3 occupe la position de fermeture de la vanne 1 (figure 12), c'est-à-dire avec une rotation nulle dudit moyen. Par rapport à l'entrée 6 et à la sortie 7 de diamètres identiques et inférieurs à celui du logement 4, et illustrées par le contour C des conduits 8 les délimitant, on voit bien que le bord périphérique 17 formant la génératrice G du disque, représentée en plan selon une sinusoïde, est constamment en contact avec la paroi latérale 5 dudit logement 4. De la sorte, la fermeture de la vanne est totale, les passages d'entrée 6 et intermédiaire 44 étant parfaitement isolées l'un de l'autre, ce qui interdit toute circulation du fluide à travers la vanne 1.

En regard de la figure 14, le disque incliné 16 occupe la position de pleine ouverture de la vanne, c'est-à-dire avec une rotation de +/- 90° du moyen d'obturation 3. Dans ce cas, on voit bien que le bord périphérique 17 sous forme de sinusoïde (décalée de Π/2 par rapport à la figure 11) passe alors en grande partie (référence P1) par les passages d'entrée 6 et intermédiaire 44, au milieu de ceux-ci. Seule l'autre partie (référence P2) du bord 17 reste au contact de la paroi latérale 5 du logement, ce qui montre bien la pleine ouverture de la vanne 1 pour un débit de fluide maximum, à travers elle.

Une telle vanne assure par conséquent l'étanchéité dans les deux sens de fermeture par l'adaptation du disque incliné dans le logement circulaire (contact cylindre-cylindre). Ledit disque peut également être entrainé sur plus de 360°. Il peut encore, par sa symétrie, se monter indifféremment dans les deux sens sans détrompage dans le corps de la vanne. En outre, comme le bord du disque se déplace linéairement sur la paroi cylindrique, cela permet d'éviter l'encrassement entre le disque et la paroi et d'assurer un auto-nettoyage de la vanne, ce qui est bénéfique lorsque celle-ci est une vanne EGR.

Si l'on se reporte de nouveau à la figure 1, on constate que ledit second moyen d'obturation 3' être réalisé, par exemple, de façon identique à ce qui vient d'être évoqué. Ledit second logement 4' diffère quant à lui en ce que le fluide en sort non plus radialement mais, comme déjà dit, axialement par les premier 40 et second 42 passage de sortie. Ledit passage intermédiaire 44 débouche ici radialement dans ledit second logement 4'.

Autrement dit, dans ladite première plage angulaire, le disque 14 desdits second moyens de rotation 3' dévie le flux qui passe d'une orientation radiale en débouchant dudit passage intermédiaire 44 dans ledit second logement 4' à une orientation axiale pour pénétrer dans ledit premier passage de sortie 40 à partir dudit second logement 4'.

Dans ladite seconde plage angulaire, ledit disque 14 desdits second moyens de rotation 3' occupe une position symétrique à la précédente et dévie le flux qui passe d'une orientation radiale en débouchant dudit passage intermédiaire 44 dans ledit second logement 4' à une orientation axiale pour pénétrer dans ledit dans second passage de sortie 42, prévu opposé au premier, à partir dudit second logement 4'.

Ledit second moyen d'obturation 3' joue donc essentiellement ici un rôle de déflecteur.

Les logements 4, 4' pourront être parallèles entre eux, de même que les tiges de commande 15 des premier 3 et second 3' moyens d'obturation correspondants.

## Revendications

1. Vanne de circulation de fluide, comportant un corps (2) apte à être traversé par ledit fluide, **caractérisée en ce qu'**elle comprend un premier et un second moyen d'obturation (3, 3'), disposés en série, selon le sens d'écoulement du fluide, dans ledit corps et pouvant occuper chacun, par rotation desdits moyens (3, 3') par rapport audit corps (2), différentes positions angulaires, ladite vanne comprenant en outre une cinématique permettant d'entraîner lesdits moyens d'obturation (3, 3') à partir d'un même moteur d'actionnement, ladite vanne étant configurée pour autoriser :
- sur une première plage angulaire dudit premier moyen d'obturation (3), un dosage dudit fluide dans une première voie (40) de sortie de ladite vanne, ledit second moyen d'obturation (3') étant dans une position de pleine ouverture de ladite première voie (40),
- sur une seconde plage angulaire dudit premier moyen d'obturation (3), un dosage dudit fluide dans une seconde voie (42) de sortie de ladite vanne, ledit second moyen d'obturation (3') étant dans une seconde position de pleine ouverture de ladite seconde voie (40).

2. Vanne selon la revendication 1 dans laquelle ladite vanne est en outre configurée pour autoriser, sur une troisième et/ou quatrième plage angulaire dudit premier moyen d'obturation (3), une fermeture d'un passage d'entrée (6) de ladite vanne.

3. Vanne selon la revendication 2 dans laquelle les troisième et quatrième plages alternent avec les première et deuxième plages.

4. Vanne selon l'une quelconque des revendications 2 ou 3 dans laquelle ledit corps (2) comprend un premier logement (4, 4') pour le premier moyen d'obturation (3) et un second logement (4,4') pour le second moyen d'obturation (3'), lesdits premier et second passages de sortie (40, 42) débouchant dans ledit second logement (4').

5. Vanne selon la revendication 4 dans laquelle ledit passage d'entrée (6) débouche dans ledit premier logement.

6. Vanne selon l'une quelconque des revendications 4 ou 5 dans laquelle ledit corps (2) comprend un passage (44) pour le fluide reliant lesdits premier (4) et second (4') logements.

7. Vanne selon l'une quelconque des revendications 4 à 6 dans laquelle le premier (3) et/ou le second (3') moyen d'obturation comportent chacun au moins une partie d'obturation (14) agencée dans un plan incliné, respectivement par rapport audit premier et/ou second logement (4, 4'), et coopérant avec une paroi latérale (5) du logement (4, 4') correspondant par une génératrice périphérique de manière à assurer un contact étanche entre le premier et/ou le second moyen d'obturation (3, 3'), d'une part, et le corps (2), d'autre part, en au moins une position angulaire.

8. Vanne selon la revendication 7, dans laquelle ladite partie inclinée (14) du premier et/ou du second moyen d'obturation (3, 3') est conformée en un disque rotatif (16) dont le bord périphérique (17) constitue la génératrice de contact avec la paroi latérale (5) du logement (4, 4') correspondant de manière à assurer un contact cylindre sur cylindre.

9. Vanne selon l'une des revendications 7 et 8, dans laquelle la partie inclinée d'obturation (14) forme un angle de sensiblement 45° avec l'axe (A) du logement (4, 4') correspondant du corps (2).

10. Vanne selon l'une des revendications 7 à 9, dans laquelle ledit premier et/ou ledit second moyen d'obturation (3, 3') comporte une tige de commande (15) qui est reliée à la partie inclinée (14) pour l'entraîner en rotation et qui est disposée dans l'axe dudit logement (4, 4') correspondant, passant par le centre de ladite partie inclinée.

11. Vanne selon la revendication 10, dans laquelle ladite tige (15) et ladite partie inclinée (14) sont réalisées en une seule pièce.

12. Vanne selon l'une des revendications 10 ou 11, dans laquelle, du côté opposé à la partie inclinée d'obturation, la tige (15) est montée dans un palier de guidage (18) solidaire du corps et/ou est reliée, en sortie de celui-ci, à un moyen d'entraînement en rotation de ladite cinématique.

13. Vanne selon l'une quelconque des revendications 10 à 12 dans laquelle les tiges (15) des premier (3) et second (3') moyens d'obturation sont parallèles entres elles.

14. Vanne selon l'une quelconque des revendications précédentes dans laquelle ladite cinématique, ledit corps (2) et lesdits premier et/ou second moyens d'obturation (3, 3') sont configurés pour autoriser une rotation desdits premier et/ou second moyens d'obturation (3, 3') sur plus de 360°

15. Vanne selon l'une quelconque des revendications précédentes dans laquelle, ladite cinématique, ledit corps (2) et lesdits premier et/ou second moyens d'obturation (3, 3') sont configurés pour autoriser une rotation desdits premier et/ou second moyens d'obturation (3, 3') dans les deux sens.

## Patentansprüche

1. Fluidkreislaufventil, umfassend einen Körper (2), der von dem Fluid durchströmt werden kann, **dadurch gekennzeichnet, dass** es ein erstes und ein zweites Verschlussmittel (3, 3') umfasst, die in Strömungsrichtung des Fluids im Körper in Reihe angeordnet sind und durch Drehung der Mittel (3, 3') bezüglich des Körpers (2) jeweils verschiedene Winkelpositionen einnehmen können, wobei das Ventil ferner eine Kinematik umfasst, dank derer die Verschlussmittel (3, 3') von ein und demselben Stellmotor angetrieben werden können, wobei das Ventil dazu konfiguriert ist, Folgendes zu gestatten:
- in einem ersten Winkelbereich des ersten Verschlussmittels (3) eine Dosierung des Fluids in einen ersten Ausgangskanal (40) des Ventils, wobei das zweite Verschlussmittel (3') in einer Position ist, in der der erste Kanal (40) voll geöffnet ist,
- in einem zweiten Winkelbereich des ersten Verschlussmittels (3) eine Dosierung des Fluids in einen zweiten Ausgangskanal (42) des Ventils, wobei das zweite Verschlussmittel (3') in einer zweiten Position ist, in der der zweite Kanal (40) voll geöffnet ist.

2. Ventil nach Anspruch 1, wobei das Ventil ferner dazu konfiguriert ist, in einem dritten und/oder vierten Winkelbereich des ersten Verschlussmittels (3) ein Schließen eines Eingangsdurchgangs (6) des Ventils zu gestatten.

3. Ventil nach Anspruch 2, wobei der dritte und der vierte Bereich mit dem ersten und dem zweiten Bereich abwechseln.

4. Ventil nach einem der Ansprüche 2 oder 3, wobei der Körper (2) eine erste Aufnahme (4, 4') für das erste Verschlussmittel (3) und eine zweite Aufnahme (4, 4') für das zweite Verschlussmittel (3') umfasst, wobei der erste und der zweite Ausgangsdurchgang (40, 42) in die zweite Aufnahme (4') münden.

5. Ventil nach Anspruch 4, wobei der Eingangsdurchgang (6) in die erste Aufnahme mündet.

6. Ventil nach einem der Ansprüche 4 oder 5, wobei der Körper (2) einen Durchgang (44) für das Fluid umfasst, der die erste (4) und die zweite (4') Aufnahme verbindet.

7. Ventil nach einem der Ansprüche 4 bis 6, wobei das erste (3) und/oder das zweite (3') Verschlussmittel jeweils mindestens einen Verschlussteil (14) umfassen, der jeweils bezüglich der ersten und/oder der zweiten Aufnahme (4, 4') in einer geneigten Ebene angeordnet ist und über eine Umfangserzeugende mit einer Seitenwand (5) der entsprechenden Aufnahme (4, 4') zusammenwirkt, um in mindestens einer Winkelposition einen dichten Kontakt zwischen einerseits dem ersten und/oder dem zweiten Verschlussmittel (3, 3') und andererseits dem Körper (2) zu gewährleisten.

8. Ventil nach Anspruch 7, wobei der geneigte Teil (14) des ersten und/oder des zweiten Verschlussmittels (3, 3') als eine Drehscheibe (16) gestaltet ist, deren Umfangsrand (17) die Kontakterzeugende mit der Seitenwand (5) der entsprechenden Aufnahme (4, 4') darstellt, um einen Kontakt von Zylinder an Zylinder zu gewährleisten.

9. Ventil nach einem der Ansprüche 7 und 8, wobei der geneigte Verschlussteil (14) einen Winkel von im Wesentlichen 45° mit der Achse (A) der entsprechenden Aufnahme (4, 4') des Körpers (2) bildet.

10. Ventil nach einem der Ansprüche 7 bis 9, wobei das erste und/oder das zweite Verschlussmittel (3, 3') eine Steuerstange (15) umfasst, die mit dem geneigten Teil (14) verbunden ist, um ihn drehanzutreiben, und die in der durch die Mitte des geneigten Teils gehenden Achse der entsprechenden Aufnahme (4, 4') angeordnet ist.

11. Ventil nach Anspruch 10, wobei die Stange (15) und der geneigte Teil (14) einstückig ausgeführt sind.

12. Ventil nach einem der Ansprüche 10 oder 11, wobei die Stange (15) an der dem geneigten Verschlussteil gegenüberliegenden Seite in einem fest mit dem Körper verbundenen Führungslager (18) montiert und/oder an dessen Ausgang mit einem Drehantriebsmittel der Kinematik verbunden ist.

13. Ventil nach einem der Ansprüche 10 bis 12, wobei die Stangen (15) des ersten (3) und des zweiten (3') Verschlussmittels zueinander parallel verlaufen.

14. Ventil nach einem der vorhergehenden Ansprüche, wobei die Kinematik, der Körper (2) und das erste und/oder das zweite Verschlussmittel (3, 3') dazu konfiguriert sind, eine Drehung des ersten und/oder des zweiten Verschlussmittels (3, 3') um mehr als 360° zu gestatten.

15. Ventil nach einem der vorhergehenden Ansprüche, wobei die Kinematik, der Körper (2) und das erste und/oder das zweite Verschlussmittel (3, 3') dazu konfiguriert sind, eine Drehung des ersten und/oder des zweiten Verschlussmittels (3, 3') in beiden Richtungen zu gestatten.

## Claims

1. Fluid circulation valve comprising a body (2) through which said fluid can pass, **characterized in that** it comprises a first and a second shutoff means (3, 3') arranged in series, in the direction of flow of the fluid, in said body and each able to occupy different angular positions by rotation of said means (3, 3') in relation to said body (2), said valve also comprising a kinematic chain allowing driving of said shutoff means (3, 3') by the same actuating motor, said valve being configured to allow:
- over a first angular range of said first shutoff means (3), a metering of said fluid in a first outlet port (40) of said valve, said second shutoff means (3') being in a position in which said first port (40) is fully open,
- over a second angular range of said first shutoff means (3), a metering of said fluid in a second outlet port (42) of said valve, said second shutoff means (3') being in a second position in which said second port (40) is fully open.

2. Valve according to Claim 1, wherein said valve is also configured to allow, over a third and/or fourth angular range of first shutoff means (3), closure of an inlet passage (6) of said valve.

3. Valve according to Claim 2, wherein the third and fourth ranges alternate with the first and second ranges.

4. Valve according to any of Claims 2 or 3, wherein said body (2) comprises a first housing (4, 4') for the first shutoff means (3) and a second housing (4, 4' ) for the second shutoff means (3' ) , said first and second outlet passages (40, 42) opening into said second housing (4').

5. Valve according to Claim 4, wherein said inlet passage (6) opens into said first housing.

6. Valve according to any of Claims 4 or 5, wherein said body (2) comprises a passage (44) for the fluid connecting said first (4) and second (4') housings.

7. Valve according to any of Claims 4 to 6, wherein the first (3) and/or the second (3') shutoff means each comprise at least one first shutoff part (14) arranged in a plane which is inclined in relation to said first and/or second housing (4, 4') respectively and cooperates with a side wall (5) of the corresponding housing (4, 4') via a peripheral generatrix, so as to ensure a sealed contact between the first and/or second shutoff means (3, 3') firstly and the body (2) secondly in at least one angular position.

8. Valve according to Claim 7, wherein said inclined part (14) of the first and/or second shutoff means (3, 3') is shaped as a rotary disk (16), the peripheral edge (17) of which constitutes the generatrix for contact with the side wall (5) of the corresponding housing (4, 4'), so as to ensure a cylinder-on-cylinder contact.

9. Valve according to any of Claims 7 and 8, wherein the inclined shutoff part (14) forms an angle of substantially 45° with axis (A) of the corresponding housing (4, 4') of the body (2).

10. Valve according to any of Claims 7 to 9, wherein said first and/or said second shutoff means (3, 3') comprises a control rod (15) which is linked to the inclined part (14) in order to drive this in rotation and which is arranged in the axis of said corresponding housing (4, 4'), passing via the centre of said inclined part.

11. Valve according to Claim 10, wherein said rod (15) and said inclined part (14) are produced as one piece.

12. Valve according to any of Claims 10 or 11, wherein on the side opposite the inclined shutoff part, the rod (15) is mounted in a guide bearing (18) integral with the body, and/or is connected at the outlet thereof to a means for driving said kinematic chain in rotation.

13. Valve according to any of Claims 10 to 12, wherein the rods (15) of the first (3) and second (3') shutoff means are parallel with each other.

14. Valve according to any of the preceding claims, wherein said kinematic chain, said body (2) and said first and/or said second shutoff means (3, 3') are configured to allow a rotation of said first and/or second shutoff means (3, 3') over more than 360°.

15. Valve according to any of the preceding claims, wherein said kinematic chain, said body (2) and said first and/or second shutoff means (3, 3') are configured to allow a rotation of said first and/or second shutoff means (3, 3') in both directions.
